# FASCICULE DE BREVET EUROPEEN

(11) **EP 2 072 353 B1**
(45) Date de publication et mention de la délivrance du brevet: **04.08.2010**
(21) Numéro de dépôt: 07124020.4
(22) Date de dépôt: 21.12.2007
(51) Int. Cl.: B60R 25/02, E05B 65/12

(54) **Antivol pour colonne de direction**
Lenkradschloss für Lenksäule
Antitheft device for steering column

(43) Date de publication de la demande: 24.06.2009
(73) Titulaire: Valeo Sicherheitssysteme GmbH, 85253 Erdweg (DE)
(72) Inventeur: Laval, Anthony, D-85253 Erdweg (DE); Montay, Jean-Philippe, D-85253 Erdweg (DE)
(74) Mandataire: Jacquot, Ludovic R. G.

(56) Documents cités:
- WO-A-02/085678
- WO-A-2006/048423
- DE-A1- 4 444 504

## Description

La présente invention concerne un antivol pour une colonne de direction d'un véhicule automobile.

Les antivols de colonne de direction comprennent classiquement des moyens de blocage permettant de bloquer la colonne de direction en rotation, par exemple lorsque le moteur du véhicule est arrêté ou lorsque la clé de contact a été retirée, afin d'empêcher l'utilisation du volant du véhicule, et ainsi toute tentative de vol du véhicule.

De façon connue, les moyens de blocage sont réalisés sous la forme d'un pêne qui vient bloquer la colonne de direction, généralement en faisant saillie dans des logements d'une collerette fixée à la colonne.

Un tel antivol est décrit dans le document WO 2006/048423, au nom de la Demanderesse.

Dans ce document, le moyen de blocage de la colonne de direction est entraîné par des moyens d'actionnement motorisés. Ces moyens d'actionnement comprennent une roue dentée entraînée par une vis sans fin solidaire d'un moteur électrique et entraînant le pêne.

Toutefois, en cas de défaillance des moyens d'actionnement, par exemple après avoir subi un effort trop important, les moyens d'actionnement peuvent rester bloqués tout en continuant à pouvoir être sollicités. Ainsi, la roue d'entraînement peut rester coincée dans une position indéfinie, susceptible entre autre d'engendrer des dommages plus importants.

La présente invention vise donc à proposer un antivol optimisé pour une colonne de direction permettant une réparation plus aisée, et une détection plus rapide de la défaillance.

A cet effet, l'invention a pour objet un antivol pour une colonne de direction d'un véhicule comprenant des moyens de blocage de ladite colonne de direction, et des moyens d'actionnement desdits moyens de blocage comportant un moteur, une vis sans fin solidaire d'un arbre de sortie du moteur, et une roue d'entraînement des moyens de blocage qui est apte à engrener avec la vis sans fin et qui comporte un axe de support, **caractérisé en ce qu**'il comporte en outre des moyens élastiques aptes à solliciter la roue d'entraînement vers une position éloignée de la vis sans fin en cas de rupture dudit axe de support, dans laquelle la roue d'entraînement n'est plus en prise avec la vis sans fin.

Avantageusement, les moyens élastiques comprennent un ressort de poussée ayant une première extrémité s'appuyant contre une paroi de boîtier de l'antivol et une deuxième extrémité en prise avec l'axe de support.

Selon un mode de réalisation préféré, l'axe de support présente une extrémité libre dépassant un plan défini par la roue d'entraînement et la deuxième extrémité du ressort comporte un collier entourant l'axe de support.

Préférentiellement, l'extrémité libre de l'axe de support comporte une rainure recevant le collier dudit ressort.

De façon avantageuse, la paroi de l'antivol présente en outre des moyens d'arrêt aptes à entrer en prise avec la roue d'entraînement pour bloquer la roue d'entraînement en rotation dans ladite position éloignée.

De façon préférée, les moyens d'arrêt comportent des dentures aptes à coopérer avec les dents correspondantes de la roue d'entraînement.

Selon un mode de réalisation avantageux, l'antivol comporte au moins un capteur de détection de position de la roue d'entraînement.

Avantageusement, le capteur de détection de position est apte à détecter en outre la position éloignée de la roue d'entraînement.

D'autres caractéristiques et avantages de l'invention ressortiront de la description suivante, donnée à titre d'exemple, sans caractère limitatif, en regard des dessins annexés sur lesquels :
- la figure 1 est une vue en coupe d'une partie de l'antivol selon l'invention,
- la figure 2 est une vue selon une coupe I-I de la partie de l'antivol de la figure 1, et
- la figure 3 est une vue en coupe de la partie de l'antivol de la figure 1 en position éloignée.

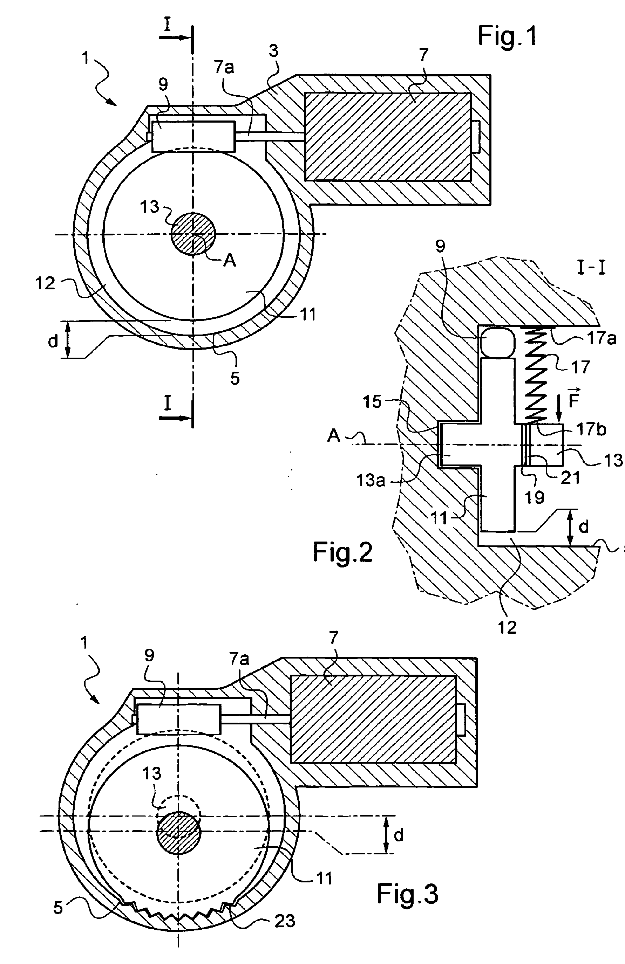

Sur la figure 1 est représenté un antivol 1 de colonne de direction d'un véhicule comprenant des moyens de blocage (non représentés) pour bloquer la colonne de direction en rotation, par exemple lorsque le moteur du véhicule est arrêté ou que la clé de contact a été retirée, afin d'empêcher le viol du véhicule.

Les moyens de blocage sont par exemple réalisés sous la forme d'un pêne (non représenté). Ce pêne peut prendre une position bloquée dans laquelle il s'engage dans une partie de la colonne correspondante afin de bloquer la colonne en rotation, et une position non bloquée dans laquelle il est dégagé de la partie de la colonne correspondante afin de libérer la colonne et de permettre l'utilisation du volant.

Les moyens de blocage sont agencés dans un boîtier d'antivol 3 ensemble avec des moyens d'actionnement des moyens de blocage.

Ces moyens d'actionnement comportent un moteur électrique 7 dont l'arbre de sortie 7a porte une vis sans fin 9 qui est en prise avec une roue d'entraînement 11.

La roue d'entraînement 11 est une roue dentée présentant un axe de support 13 reçu dans un palier 15 ménagé dans le boîtier 3.

Comme on peut le constater sur la figure 2, l'axe de support 13 est avantageusement réalisé sous la forme d'une tige traversant axialement la roue d'entraînement 11, et formée d'une seule pièce avec celle-ci.

Ainsi, l'axe de support 13 présente une première extrémité 13a, et une seconde extrémité 13b de part et d'autre de la roue dentée d'entraînement 11. La première extrémité 13a peut tourner dans le palier 15 du boîtier 3, tandis que la seconde extrémité 13b est libre.

Le boîtier 3 de l'antivol 1 est dimensionné de manière qu'entre une paroi 5 du boîtier 3 et le bord périphérique de la roue d'entraînement 11, de préférence du côté opposé à la vis sans fin 9, un espace libre 12 est ménagé.

Selon l'invention, l'antivol 1 comporte des moyens élastiques sollicitant la roue d'entraînement 11 depuis une position de fonctionnement dans laquelle la roue d'entraînement est engrenée par la vis sans fin 9 (figure 1) vers une position éloignée de la vis sans fin 9, dans laquelle la roue d'entraînement 11 n'est plus en prise avec la vis sans fin 9 (figure 3).

Ainsi, en cas de rupture de l'axe de support 13 par exemple au niveau du palier 15, la roue d'entraînement 11 est déplacée dans cette position éloignée, dans laquelle aucun mouvement ne peut plus être transmis à la roue d'entraînement 11.

Selon un mode de réalisation préféré, les moyens élastiques comprennent un ressort 17, dont une première extrémité 17a s'appuie contre la paroi 5 du boîtier 3 et une deuxième extrémité 17b est en prise avec l'axe de support 13. Cette deuxième extrémité 17b comporte de préférence un collier 19 entourant l'axe de support 13. Avantageusement, l'axe de support 13 présente sur son extrémité libre 13b une rainure 21 circonférentielle dans laquelle le collier 19 est apte à coulisser. Ainsi, l'axe de support 13 peut tourner autour de l'axe de rotation A sans entraîner le ressort 17. Le ressort 17 peut alors exercer une poussée suivant la flèche F sur l'extrémité 13b de l'axe de support 13, pour entraîner la roue d'entraînement 11 dans sa position éloignée.

Selon un mode de réalisation avantageux, l'antivol 1 présente en outre des moyens d'arrêt 23, comme illustré sur la figure 3. Ces moyens d'arrêt 23 sont aptes à entrer en prise avec la roue d'entraînement 11 pour bloquer cette dernière en rotation dans la position éloignée. Ainsi, la roue d'entraînement 11 est immobilisée, évitant d'occasionner des dommages supplémentaires au niveau de l'antivol.

De préférence, les moyens d'arrêt 23 sont formés au niveau de l'espace libre 12 du boîtier 3 d'antivol. Pour cela, la paroi 5 comporte avantageusement des dents 23 aptes à coopérer avec celles de la roue d'entraînement 11 en position éloignée, permettant ainsi de bloquer la roue sans pièce ou dispositif supplémentaire dans l'antivol.

De préférence, l'antivol 1 comporte un capteur de position (non représenté). Selon un mode de réalisation préféré, le capteur de détection est apte à détecter la position éloignée de la roue d'entraînement 11.

Ainsi, partant de la position normale de fonctionnement (figure 1), lors d'une rupture de l'extrémité 13a de l'axe de support 13, le ressort 17 sollicite la roue d'entraînement 11 vers la position éloignée (figure 3). La roue d'entraînement 11 réalise alors un mouvement de translation sur une distance d dans l'espace libre 12 prévu à cet effet, vers la paroi 5 du boîtier 3 du côté opposé à la vis sans fin 9.

Dans cette position, la roue d'entraînement 11 n'engrené plus avec la vis sans fin 9.

L'arbre du moteur 7a peut alors continuer de tourner sans transmettre de mouvement à la roue d'entraînement 11.

En outre, la roue d'entraînement 11 est bloquée en rotation par les dents 23 de la paroi 5.

Simultanément, lorsque la roue n'est plus dans la position normale de fonctionnement (figure 1), un capteur de détection reçoit un signal de plus en plus faible permettant de diagnostiquer que la roue d'entraînement 11 est dans la position éloignée. Ce signal caractéristique est par exemple transmis à un indicateur de la voiture.

La défaillance peut alors être détectée par l'utilisateur.

On comprend alors que ce système permet une intervention rapide, permettant ainsi de limiter la propagation des dégâts et ainsi de réduire les coûts de réparation.

## Revendications

1. Antivol pour une colonne de direction d'un véhicule comprenant:
- des moyens de blocage de ladite colonne de direction, et
- des moyens d'actionnement desdits moyens de blocage comportant :
- un moteur (7),
- une vis sans fin (9) solidaire d'un arbre de sortie (7a) du moteur (7), et
- une roue d'entraînement (11) des moyens de blocage qui est apte à engrener avec la vis sans fin (9) et qui comporte un axe de support (13),
**caractérisé en ce qu'**il comporte en outre des moyens élastiques aptes à solliciter la roue d'entraînement (11) vers une position éloignée de la vis sans fin (9) en cas de rupture dudit axe de support (13), dans laquelle la roue d'entraînement (11) n'est plus en prise avec la vis sans fin (9).

2. Antivol selon la revendication 1, **caractérisé en ce que** les moyens élastiques comprennent un ressort de poussée (17) ayant une première extrémité (17a) s'appuyant contre une paroi (5) de boîtier de l'antivol (1) et une deuxième extrémité (17b) en prise avec ledit axe de support (13).

3. Antivol selon la revendication 2, **caractérisé en ce que** l'axe de support (13) présente une extrémité libre (13b) dépassant un plan défini par la roue d'entraînement (11) et **en ce que** la deuxième extrémité (17b) dudit ressort (17) comporte un collier (19) entourant ledit axe de support (13).

4. Antivol selon la revendication 3, **caractérisé en ce que** l'extrémité libre (13b) dudit axe de support (13) comporte une rainure (21) recevant le collier (19) dudit ressort (17).

5. Antivol selon l'une quelconque des revendications 1 à 4, **caractérisé en ce que** la paroi (5) de boîtier de l'antivol (1) présente en outre des moyens d'arrêt (23) aptes à entrer en prise avec la roue d'entraînement (11) pour bloquer la roue d'entraînement (11) en rotation dans ladite position éloignée.

6. Antivol selon la revendication 5, **caractérisé en ce que** lesdits moyens d'arrêt (23) comportent des dentures aptes à coopérer avec les dents correspondantes de la roue d'entraînement (11).

7. Antivol selon l'une quelconque des revendications 1 à 6, **caractérisé en ce qu'**il comporte au moins un capteur de détection de position de la roue d'entraînement (11).

8. Antivol selon la revendication 7, **caractérisé en ce que** le capteur de détection de position est apte à détecter en outre ladite position éloignée de la roue d'entraînement (11).

## Claims

1. Antitheft device for a vehicle steering column, comprising:
- immobilizing means for immobilizing the said steering column, and
- actuating means for actuating the said immobilizing means, comprising:
- a motor (7),
- a worm (9) secured to an output shaft (7a) of the motor (7), and
- a drive wheel (11) for driving the immobilizing means and which is able to mesh with the worm (9) and has a support spindle (13),
**characterized in that** it further comprises elastic means able to urge the drive wheel (11) towards a position away from the worm (9) if the said support spindle (13) is broken, in which position the drive wheel (11) is no longer engaged with the worm (9).

2. Antitheft device according to Claim 1, **characterized in that** the elastic means comprise a thrust spring (17) having the first end (17a) pressing against a wall (5) of the housing of the antitheft device (1) and a second end (17b) engaging with the said support spindle (13).

3. Antitheft device according to Claim 2, **characterized in that** the support spindle (13) has a free end (13b) protruding beyond a plane defined by the drive wheel (11), and **in that** the second end (17b) of the said spring (17) has a collar (19) surrounding the said support spindle (13).

4. Antitheft device according to Claim 3, **characterized in that** the free end (13b) of the said support spindle (13) has a groove (21) accepting the collar (19) of the said spring (17).

5. Antitheft device according to any one of Claims 1 to 4, **characterized in that** the wall (5) of the housing of the antitheft device (1) also has stop means (23) able to engage with the drive wheel (11) to immobilize the drive wheel (11) in terms of rotation in the said distant position.

6. Antitheft device according to Claim 5, **characterized in that** the said stop means (23) comprise sets of teeth able to mate with the corresponding teeth of the drive wheel (11).

7. Antitheft device according to any one of Claims 1 to 6, **characterized in that** it comprises at least one position detection sensor that detects the position of the drive wheel (11).

8. Antitheft device according to Claim 7, **characterized in that** the position detection sensor is able also to detect whether the drive wheel (11) is in the said distant position.

## Patentansprüche

1. Diebstahlsicherung für eine Lenksäule eines Fahrzeugs, die enthält:
- Einrichtungen zum Blockieren der Lenksäule und
- Einrichtungen zur Betätigung der Blockiereinrichtungen, die aufweisen:
- einen Motor (7),
- eine Schnecke (9), die fest mit einer Abtriebswelle (7a) des Motors (7) verbunden ist, und
- ein Antriebsrad (11) der Blockiereinrichtungen, das mit der Schnecke (9) in Eingriff kommen kann und eine Tragachse (13) aufweist,
**dadurch gekennzeichnet, dass** sie außerdem elastische Einrichtungen aufweist, die im Fall eines Bruchs der Tragachse (13) das Antriebsrad (11) in eine von der Schnecke (9) entfernte Position beaufschlagen können, in der das Antriebsrad (11) nicht mehr mit der Schnecke (9) in Eingriff ist.

2. Diebstahlsicherung nach Anspruch 1, **dadurch gekennzeichnet, dass** die elastischen Einrichtungen eine Druckfeder (17) enthalten, deren erstes Ende (17a) gegen eine Gehäusewand (5) der Diebstahlsicherung (1) anliegt und deren zweites Ende (17b) mit der Tragachse (13) in Eingriff steht.

3. Diebstahlsicherung nach Anspruch 2, **dadurch gekennzeichnet, dass** die Tragachse (13) ein freies Ende (13b) hat, das über eine vom Antriebsrad (11) definierte Ebene hinaus vorsteht, und dass das zweite Ende (17b) der Feder (17) eine Schelle (19) aufweist, die die Tragachse (13) umgibt.

4. Diebstahlsicherung nach Anspruch 3, **dadurch gekennzeichnet, dass** das freie Ende (13b) der Tragachse (13) eine Rille (21) aufweist, die die Schelle (19) der Feder (17) aufnimmt.

5. Diebstahlsicherung nach einem der Ansprüche 1 bis 4, **dadurch gekennzeichnet, dass** die Gehäusewand (5) der Diebstahlsicherung (1) außerdem Arretiereinrichtungen (23) hat, die mit dem Antriebsrad (11) in Eingriff kommen können, um das Antriebsrad (11) in der entfernten Position in Drehung zu blockieren.

6. Diebstahlsicherung nach Anspruch 5, **dadurch gekennzeichnet, dass** die Arretiereinrichtungen (23) Zahnungen aufweisen, die mit den entsprechenden Zähnen des Antriebsrades (11) zusammenwirken können.

7. Diebstahlsicherung nach einem der Ansprüche 1 bis 6, **dadurch gekennzeichnet, dass** sie mindestens einen Positionserfassungssensor des Antriebsrads (11) aufweist.

8. Diebstahlsicherung nach Anspruch 7, **dadurch gekennzeichnet, dass** der Positionserfassungssensor außerdem die entfernte Position des Antriebsrads (11) erfassen kann.
